# EUROPÄISCHE PATENTSCHRIFT

(11) **EP 1 142 423 B1**
(45) Veröffentlichungstag und Bekanntmachung des Hinweises auf die Patenterteilung: **06.10.2004**
(21) Anmeldenummer: 99967877.4
(22) Anmeldetag: 09.12.1999
(51) Int. Cl.: H04Q 7/38, H04B 7/005

(54) **VERFAHREN ZUR SIGNALÜBERTRAGUNG IN EINEM KANAL ZUM WILLKÜRLICHEN ZUGRIFF EINES FUNK-KOMMUNIKATIONSSYSTEMS**
METHOD FOR TRANSMITTING SIGNALS IN A CHANNEL FOR ARBITRARY ACCESS TO A RADIOCOMMUNICATION SYSTEM
PROCEDE DE TRANSMISSION DE SIGNAUX SUR UN CANAL POUR L'ACCES ARBITRAIRE A UN SYSTEME DE RADIOCOMMUNICATIONS

(30) Priorität: 18.12.1998 DE 19858725
(43) Veröffentlichungstag der Anmeldung: 10.10.2001
(73) Patentinhaber: SIEMENS AKTIENGESELLSCHAFT, 80333 München (DE)
(72) Erfinder: MITJANA, Enric, D-89522 Heidenheim (DE)
(86) Internationale Anmeldenummer: PCT/DE1999/003938
(87) Internationale Veröffentlichungsnummer: WO 2000/038453

(56) Entgegenhaltungen:
- EP-A- 0 565 507
- WO-A-95/24102
- WO-A-98/48575

## Beschreibung

Die Erfindung betrifft ein Verfahren und eine Teilnehmerstation zur Signalübertragung in einem Kanal zum willkürlichen Zugriff eines Funk-Kommunikationssystems

Aus der WO 95/24102 ist ein Verfahren zur Priorisierung von Anrufen in einem Mobilfunksystem beschrieben, bei dem für Anrufe mit hoher Priorisierung eine höhere Übertragungsleistung verwendet wird, als für Anrufe mit niedrigerer Priorität. Dabei erfolgt bei den hochpriorisierten Anrufen die Erhöhung der Übertragungsleistung jeweils um einen konstanten Betrag. In der EP 0 565 507 A erfolgt die Aussendung von Access-Bursts in einem Mobilfunksystem aus Gründen der Interferenzminimierung mit relativ geringer Leistung. Falls die Nachricht nicht detektiert wird, wird sie wiederholt mit jeweils zunehmendem Leistungspegel übertragen, bis sie schließlich detektiert wird.

Ein Verfahren gemäß dem Oberbegriff des Anspruchs 1 ist in K. David et al: Digitale Mobilfunksysteme, Teubner Verlag Stuttgart 1996, beschrieben.

In Funk-Kommunikationssystemen werden Nachrichten (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in dem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Ein Kanal zum willkürlichen Zugriff (RACH random access channel) eines Funk-Kommunikationssystems zeichnet sich dadurch aus, daß der Zugriff auf diesen Kanal nicht koordiniert ist. Die Mobilstationen einer Funkzelle können diesen Kanal ohne vorherige Zuteilung nutzen, um beispielsweise eine darauffolgende Zuteilung von funktechnischen Ressourcen z.B. beim Verbindungsaufbau anzufordern.

Durch den unkoordinierten Zugriff kommt es jedoch zu Kollisionen zwischen den Aussendungen der einzelnen Mobilstationen. Wenn sich bei einer empfangenden Basisstation die Aussendungen mehrerer Mobilstationen überlagern, dann sind die Aussendungen nicht mehr detektierbar und die Mobilstationen erhalten damit auch keine Quittierung der Aussendung. Nach einer Kollision versuchen die Mobilstationen erneut, im Kanal für den willkürlichen Zugriff zu senden. Je häufiger der Zugriff wiederholt werden muß, um so länger ist die Wartezeit und um so mehr sinkt die Effizienz dieses Zugriffsverfahrens.

In DE 198 17 771 wurde daher vorgeschlagen, zueinander zeitliche orthogonale Zugriffsblöcke zuzulassen und durch Wahl eines von mehreren unterschiedlichen Zugriffsblöcke, d.h. von unterschiedlichen Sendezeitpunkten innerhalb des Kanals, die Wahrscheinlichkeit einer Kollision zu verringern. Aus ETSI SMG2 UMTS L1 Expert Group, Tdoc SMG2 UMTS-L1 455/98, 14. Oktober 1998, ist eine weitere Möglichkeit bekannt geworden, die Effizienz des Verfahrens zu verbessern. Hierbei wird vorgeschlagen, eine schrittweise Leistungserhöhung vorzusehen. Die Mobilstation beginnen mit einer zur normalen Leistungseinstellung reduzierten Sendeleistung und erhöhen die Sendeleistung schrittweise bis eine Empfangsbestätigung der Basisstation vorliegt.

Der Erfindung liegt die Aufgabe zugrunde, die Effizienz der Signalübertragung im Kanal zum willkürlichen Zugriff weiter zu erhöhen. Diese Aufgabe wird durch das Verfahren mit den Merkmalen des Anspruchs 1 und die Teilnehmerstation mit den Merkmalen des Anspruchs 9 gelöst. Vorteilhafte Weiterbildungen der Erfindung sind den Unteransprüchen zu entnehmen.

Erfindungsgemäß benutzen mehrere Teilnehmerstationen den Kanal zum willkürlichen Zugriff unkoordiniert und übertragen Signale in diesem Kanal mit einer Sendeleistung entsprechend zuvor bestimmter Dämpfungswerte, wobei jedoch für eine Teilmenge der ersten Aussendungen der Signalübertragung die Sendeleistung überhöht wird. Kommt es zu Kollisionen zwischen zwei Aussendungen, die nunmehr nicht die gleiche Empfangsleistung bei der Basisstation haben, dann ist bei ausreichendem Leistungsunterschied zumindest das leistungsstärkere Signal auswertbar und nur die Aussendung des leistungsschwächeren Signals muß wiederholt werden. Damit verringern sich im Durchschnitt die Verzögerung bis zu einem erfolgreichen Empfang der Aussendungen.

Durch Ausnutzung des sogenannten Capture-Effekts setzt sich ein Signal durch, wenn die Sendeleistungen derart eingestellt wurden, daß im Gegensatz zu einem gleichmäßigen Ausgleich der Dämpfungen des Übertragungsweges eine Aussendung bereits beim ersten Mal mit überhöhter Sendeleistung gesendet wird. Im Gegensatz zu der Lösung nach ETSI SMG2 UMTS L1 Expert Group, Tdoc SMG2 UMTS-L1 455/98, 14. Oktober 1998, werden nicht alle Teilnehmerstationen gleichbehandelt und nicht zuerst mit verringerter Sendeleistung gesendet.

Nach einer vorteilhaften Weiterbildung der Erfindung wird für eine Teilmenge von Anwendungen die Sendeleistung erhöht. Diese Anwendungen sind damit bezüglich der Wahrscheinlichkeit einer sofortigen Detektion priorisiert. Eine solche Priorisierung kann neben der Anwendung, z.B. als Aufforderung zur Zuteilung funktechnischer Ressourcen, als Quittierung oder als Meldung zur Aktualisierung des Aufenthaltsortes von Teilnehmerstationen, auch für eine Teilmenge der Teilnehmerstationen oder eine Teilmenge von Diensten gelten. Damit wird es dem Betreiber des Funk-Kommunikationssystems ermöglicht, eine Differenzierung innerhalb von Anwendungen, Teilnehmerstationen oder Diensten vorzunehmen und sich eine höhere Qualität entsprechend vergüten zu lassen.

Alternativ ist es möglich, daß die Teilnehmerstationen die Sendeleistung abweichend von zuvor bestimmten Dämpfungswerten willkürlich erhöhen. Auch dadurch wird statistisch, wenn auch nicht nach Prioritäten, die Anzahl von nicht detektieren Aussendungen sinken und die Effizienz des Verfahrens steigen.

Nach einer weiteren vorteilhaften Ausbildung des Verfahrens erfolgt die Überhöhung der Sendeleistung mit unterschiedlichen Stufen. Durch mehrere möglich Stufen wird die Wahrscheinlichkeit von gleichzeitig mit gleicher Empfangsleistung bei der Basisstation eintreffender Aussendungen weiter verringert. Die Aussendung mit der stärker überhöhten Sendeleistung setzt sich durch. Bei wiederholten Aussendungen wird die Stufe der Überhöhung verändert. Dies kann in Richtung verringerter oder erhöhter Sendeleistung geschehen. Damit wird verhindert, daß die Aussendungen von zwei Teilnehmerstationen parallel ständig mit überhöhter aber gleicher Sendeleistung erfolgen. Die Wahl der Stufe oder Veränderung der Stufe erfolgt durch die Teilnehmerstation auf willkürliche, d.h. nicht für alle Teilnehmerstationen gleiche, Weise.

Besonders wichtig ist die Ausnutzung einer Ressourceneinheit der funktechnischen Ressourcen bei Funk-Kommunikationssystemen mit breitbandigen Kanälen, da die kleinste Ressourceneinheit verhältnismäßig groß ist. Die Kanäle sind nach einem TDD- oder FDD-Modus eines UMTS-Mobilfunksystems organisiert.

Ausführungsbeispiele der Erfindung werden anhand der beiliegenden Zeichnungen näher erläutert.

Dabei zeigen
- Fig 1: ein Funk-Kommunikationssystem,
- Fig 2: eine schematische Darstellung einer TDD-Funkschnittstelle zwischen Basisstation und Teilnehmerstationen,
- Fig 3: eine vereinfachte Darstellung der Sendeleistungseinstellung, und
- Fig 4: ein Simulationsergebnis.

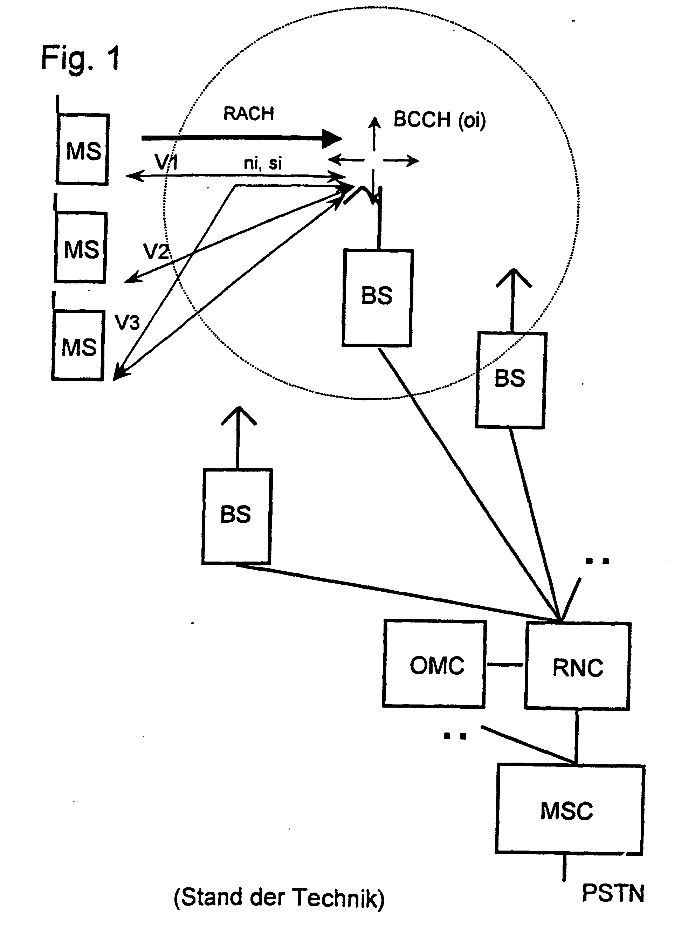

Das in Fig 1 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNC zur Steuerung der Basisstationen BS und zum Zuteilen von funktechnischen Ressourcen, d.h. einem Funkressourcenmanager, verbunden. Jede dieser Einrichtungen RNC ermöglicht wiederum eine Verbindung zu zumindest einer Basisstation BS. Eine solche Basisstation BS kann über eine Funkschnittstelle eine Verbindung zu einer Teilnehmerstation, z.B. Mobilstationen MS oder anderweitigen mobilen und stationären Endgeräten, aufbauen. Durch jede Basisstation BS wird zumindest eine Funkzelle gebildet.

In FIG 1 sind beispielhaft Verbindungen V1, V2, V3 zur Übertragung von Nutzinformationen ni und Signalisierungsinformationen als Punkt-zu-Punkt-Verbindungen zwischen Mobilstationen MS und einer Basisstation BS und ein Organisationskanal BCCH als Punkt-zu-Multipunkt-Verbindung dargestellt. Im Organisationskanal BCCH werden Organisationsinformationen oi mit einer bekannten konstanten Sendeleistung von der Basisstation BS übertragen, die für alle Teilnehmerstationen MS auswertbar sind und Angaben über die in der Funkzelle angebotenen Dienste und über die Konfiguration der Kanäle der Funkschnittstelle enthalten. In Aufwärtsrichtung UL wird für die Teilnehmerstationen MS ein Kanal RACH zum willkürlichen Zugriff angeboten.

Ein Operations- und Wartungszentrum OMC realisiert-Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß und für im unlizensierten Frequenzbereich betriebene Basisstationen und Teilnehmerstationen.

Im folgenden wird die Erfindung anhand eines Mobilfunksystem mit einer Funkschnittstelle im TDD-Übertragungsverfahren (time division duplex) erklärt, wobei ein Einsatz im FDD-Übertragungsverfahren (frequency division duplex) ebenso möglich ist.

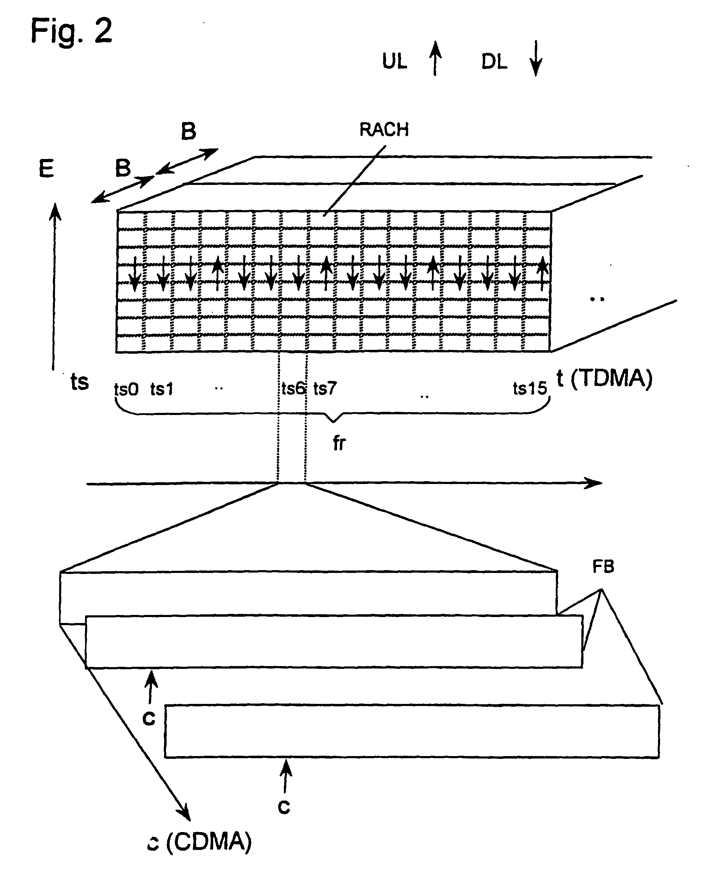

Die Rahmenstruktur einer TDD-Funkübertragung ist aus Fig 2 ersichtlich. Gemäß einer TDMA-Komponente (time division multiple access) ist eine Aufteilung eines breitbandigen Frequenzbands, beispielsweise der Bandbreite B = 5 MHz in mehrere Zeitschlitze ts gleicher Zeitdauer, beispielsweise 16 Zeitschlitze ts0 bis ts15 pro Rahmen fr vorgesehen. Ein Teil der Zeitschlitze ts werden in Abwärtsrichtung DL und ein Teil der Zeitschlitze werden in Aufwärtsrichtung UL benutzt. Bei diesem TDD-Übertragungsverfahren entspricht das Frequenzband für die Aufwärtsrichtung UL dem Frequenzband für die Abwärtsrichtung DL.

Innerhalb eines Zeitschlitze ts6 werden Informationen mehrerer Verbindungen in Funkblöcken FB übertragen. Die Daten d sind verbindungsindividuell mit einer Feinstruktur, einem Spreizkode c, gespreizt, so daß empfangsseitig beispielsweise n Verbindungen durch diese CDMA-Komponente (code division multiple access) separierbar sind.

Ein Zeitschlitz ts7 in Aufwärtsrichtung UL wird als Kanal für den willkürlichen Zugriff RACH benutzt, auf den die Mobilstationen MS unkoordiniert zugreifen können. Dieser willkürliche, unkoordinierte Zugriff kann für folgende Anwendungen eingesetzt werden:
- erstmaliger Zugriff für einen Verbindungsaufbau,
- Übertragung kleiner Datenpakete,
- Übertragung einer Quittierung empfangener Datenpakete,
- Anfrage der Mobilstation MS zur Zuteilung von funktechnischen Ressourcen während einer Verbindung,
- Auffrischen (update) des Aufenthaltsortes der Mobilstation MS im sogenannten "idle state".

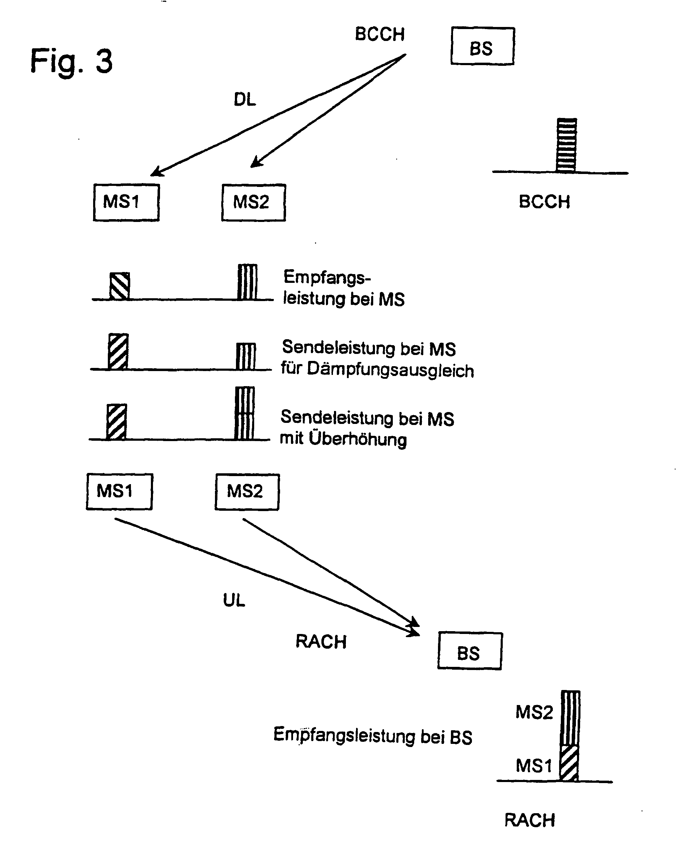

Die Mobilstationen MS benutzen den Kanal zum willkürlichen Zugriff RACH zwar unkoordiniert, aber mit geregelter Sendeleistung. Dazu werden vorab Dämpfungswerte (path loss) durch Messungen bestimmt. Die Dämpfungswerte können vorteilhafterweise durch Auswertung der Empfangsleistung des Organisationskanals BCCH bestimmt werden, siehe Fig 3. Der Organisationskanal BCCH ist ständig zugänglich und sendet mit bekannter Sendeleistung. Aus der gemessenen Empfangsleistung bei der Mobilstation MS kann eine Steuereinrichtung in der Mobilstation MS die für eine bestimmte Empfangsleistung bei der Basisstation BS notwendige Sendeleistung einer Sendeeinrichtung der Mobilstation MS errechnen, die den Dämpfungsausgleich garantiert. Je kleiner die Empfangsleistung bei der Mobilstation MS, umso größer muß in Aufwärtsrichtung UL die Sendeleistung eingestellt werden.

Nun senden die Mobilstationen MS jedoch nicht alle und nicht ständig mit dieser errechneten Sendeleistung, sondern eine Teilmenge der Anwendungen, Mobilstationen MS oder Dienste (z.B. anhand der Dienstqualität QoS) sind priorisiert, so daß eine überhöhte Sendeleistung auch bei der ersten Aussendung bereits benutzt werden kann. In Fig 3 ist die Mobilstation MS2 priorisiert. Diese Überhöhung führt auch zu einer höheren Empfangsleistung im Kanal RACH bei der Basisstation BS. Es liegt auch im Rahmen der Erfindung, daß generell das Niveau der Sendeleistung der erstmaligen Aussendung bis auf die Teilmenge gesenkt wird.

Im Vergleich zu einer auf die Dämpfung bezogenen Sendeleistung kann die von einer Mobilstation MS gewählte Sendeleistung kleiner, gleich oder entsprechend einer bestimmten Stufe überhöht werden. Ein entsprechendes Bild entsteht bei gleichzeitigem Senden der beiden Mobilstationen MS1 und MS2 bezüglich der Empfangsleistung bei der Basisstation BS. In Fig 3 ist der leistungsmäßige Anteil des Signals von Mobilstation MS2 wesentlich größer als der der Mobilstation MS1. Somit entsteht eine hohe Wahrscheinlichkeit, daß selbst im Fall von Kollisionen, also der gleichartigen Benutzung des Kanals RACH durch mehrere Mobilstationen MS, die Empfangsleistung für eine Aussendung ausreichend größer sein wird, um eine Auswertung trotzdem zu ermöglichen. Nur die übrigen Aussendungen müssen dann wiederholt werden. Die Wiederholung erfolgt ggf. mit einer anderen Stufe der Sendeleistungsüberhöhung und in einem zeitlichen Abstand der von jeder Mobilstation MS individuell festlegbar ist.

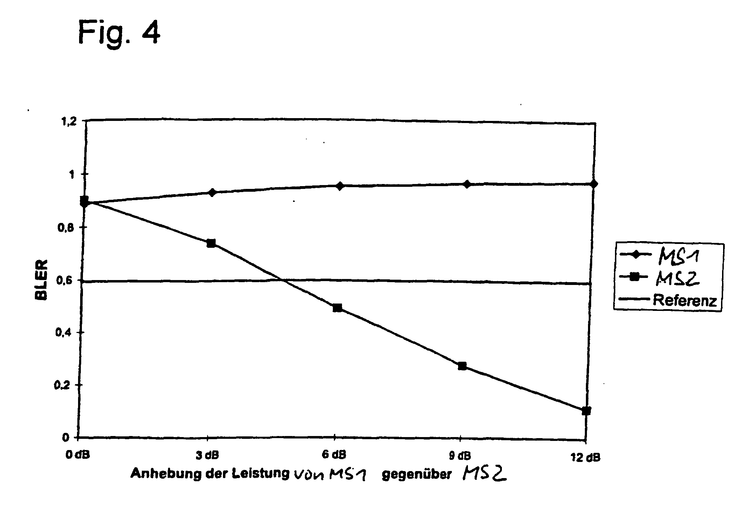

In Fig 4 ist ein Simulationsergebnis gezeigt, daß die Wahrscheinlichkeit der Auswertbarkeit (BLER block erasure rate) von zwei im gleichen Frequenzband, mit gleichem Spreizkode und im gleichem Zeitschlitz gesendeten Aussendungen vergleicht. Parameter ist die Leistungsdifferenz zwischen den Sendeleistungen über die Dämpfungsunterschiede hinaus. Je größer die Überhöhung der Sendeleistung, um so größer ist die Wahrscheinlichkeit der Auswertbarkeit.

## Patentansprüche

1. Verfahren zur Signalübertragung in einem Kanal (RACH) zum willkürlichen Zugriff in einem Funk-Kommunikationssystem, das erste und zweite Teilnehmerstationen (MS) aufweist,
bei dem
- die Teilnehmerstationen (MS) den Kanal (RACH) zum willkürlichen Zugriff unkoordiniert benutzen,
- für jede Teilnehmerstation (MS) ein Dämpfungswert für den jeweiligen Übertragungsweg bestimmt wird,
- und die ersten Teilnehmerstationen (MS) eine Signalübertragung im Kanal (RACH) mit einer Sendeleistung vornehmen, die dem zuvor bestimmten Dämpfungswert entspricht,
**dadurch gekennzeichnet,**
**daß** die zweiten Teilnehmerstationen (MS) eine Signalübertragung im Kanal (RACH) mit einer Sendeleistung vornehmen, die jeweils willkürlich und damit in nicht für alle zweiten Teilnehmerstationen gleicher Weise größer als eine dem zuvor bestimmten Dämpfungswert entsprechende Sendeleistung ist, so dass sie gegenüber dieser jeweils überhöht ist.

2. Verfahren nach Anspruch 1, bei dem
- die Signalübertragungen der Teilnehmerstationen (MS) bestimmte Anwendungen betreffen,
- wobei den die Signalübertragungen der zweiten Teilnehmerstationen (MS) betreffenden Anwendungen vor der Signalübertragung eine höhere Priorität zugeordnet wird, als den die Signalübertragungen der ersten Teilnehmerstationen betreffenden Anwendungen.

3. Verfahren nach Anspruch 2, bei dem
von den Teilnehmerstationen (MS) Signale übertragen werden, die eine Aufforderung zur Zuteilung funktechnischer Ressourcen, eine Quittierung oder Meldungen zur Aktualisierung des Aufenthaltsortes von Teilnehmerstationen (MS) betreffen.

4. Verfahren nach einem der vorherigen Ansprüche, bei dem
vor der Signalübertragung den zweiten Teilnehmerstationen (MS) gegenüber den ersten Teilnehmerstationen eine höhere Priorität zugeordnet wird.

5. Verfahren nach einem der vorherigen Ansprüche, bei dem
- die Signalübertragungen der Teilnehmerstationen (MS) bestimmte Dienste betreffen,
- wobei den die Signalübertragungen der zweiten Teilnehmerstationen (MS) betreffenden Diensten vor der Signalübertragung eine höhere Priorität zugeordnet wird, als den die Signalübertragungen der ersten Teilnehmerstationen betreffenden Diensten.

6. Verfahren nach einem der vorstehenden Ansprüche, bei dem bei wiederholter Signalübertragung durch die zweiten Teilnehmerstationen (MS) das Maß der Überhöhung verändert wird.

7. Verfahren nach einem der vorherigen Ansprüche, bei dem
die Dämpfungswerte für die Übertragungswege durch Auswertung der Empfangsleistung eines Organisationskanals (BCCH) bestimmt werden.

8. Verfahren nach einem der vorherigen Ansprüche, bei dem
der Kanal (RACH) breitbandig ist und nach einem TDD- oder FDD-Modus eines UMTS-Mobilfunksystems organisiert ist.

9. Teilnehmerstation für ein Funk-Kommunikationssystem,
das einen Kanal (RACH) zum willkürlichen Zugriff aufweist, den mehrere Teilnehmerstationen (MS) unkoordiniert benutzen,
- mit einer Sendeeinrichtung zur Signalübertragung im Kanal (RACH) zum willkürlichen Zugriff,
- mit einer Einheit zur Bestimmung eines Dämpfungswertes für den jeweiligen Übertragungsweg,
**gekennzeichnet durch**
eine Steuereinrichtung zur Einstellung der Sendeleistung für die Signalübertragung auf einen Wert, der willkürlich, das heißt in nicht für alle Teilnehmerstationen gleicher Weise, größer ist als eine dem zuvor bestimmten Dämpfungswert entsprechende Sendeleistung.

## Claims

1. Method for transmitting signals in a random access channel (RACH) in a radio communication system which has first and second subscriber stations (MS), in which
- the subscriber stations (MS) use the random access channel (RACH) in an uncoordinated manner,
- an attenuation value for the respective transmission path is determined for each subscriber station (MS),
- and the first subscriber stations (MS) carry out a signal transmission in the channel (RACH) at a transmission power which corresponds to the previously determined attenuation value,
**characterized in that** the second subscriber stations (MS) transmit a signal in the channel (RACH) at a transmission power which is in each case greater than a transmission power corresponding to the previously determined attenuation value in an arbitrary manner and thus in a manner which is not the same for all second subscriber stations, so that it is in each case excessively increased compared to the former transmission power.

2. Method according to Claim 1, in which
- the signal transmissions of the subscriber stations (MS) relate to specific applications,
- in which a higher priority is allocated to the applications relating to the signal transmissions of the second subscriber stations (MS) before the signal transmission, than to the applications relating to the signal transmissions of the first subscriber stations.

3. Method according to Claim 2, in which the subscriber stations (MS) transmit signals which relate to a request for allocation of radio resources, an acknowledgement or messages for updating the location of subscriber stations (MS).

4. Method according to one of the preceding claims, in which, before the signal transmission, a higher priority is allocated to the second subscriber stations (MS) than the first subscriber stations.

5. Method according to one of the preceding claims, in which
- the signal transmissions of the subscriber stations (MS) relate to specific services,
- in which a higher priority is allocated to the services relating to the signal transmissions of the second subscriber stations (MS), before the signal transmission, than to the services relating to the signal transmissions of the first subscriber stations.

6. Method according to one of the preceding claims, in which the extent of the excessive increase is changed with retransmission of the signal by the second subscriber stations (MS).

7. Method according to one of the preceding claims, in which the attenuation values for the transmission paths are determined by evaluating the received power in a control channel (BCCH).

8. Method according to one of the preceding claims, in which the channel (RACH) is a broadband channel and is organized on the basis of a TDD or FDD mode of a UMTS mobile radio system.

9. Subscriber station for a radio communication system which has a random access channel (RACH) which is used in an uncoordinated manner by a number of subscriber stations (MS),
- comprising a transmitting device for transmitting signals in the random access channel (RACH),
- comprising a unit for determining an attenuation value for the respective transmission path,
**characterized by**
a control device for setting the transmission power for the signal transmission to a value which is greater in an arbitrary manner, that is to say in a manner which is not the same for all subscriber stations, than a transmission power corresponding to the previously determined attenuation value.

## Revendications

1. Procédé de transmission de signaux dans un canal (RACH) pour l'accès arbitraire dans un système de radiocommunication qui présente un premier et un deuxième postes d'abonné (MS), dans lequel
- les postes d'abonné (MS) utilisent de façon non coordonnée le canal (RACH) pour l'accès arbitraire,
- pour chaque poste d'abonné (MS) est déterminée une valeur d'atténuation pour le trajet de transmission respectif,
- et les premiers postes d'abonné (MS) procèdent à une transmission de signaux dans le canal (RACH) avec une puissance d'émission correspondant à la valeur d'atténuation déterminée auparavant,
**caractérisé en ce que**
les deuxièmes postes d'abonné (MS) procèdent à une transmission de signaux dans le canal (RACH) avec une puissance d'émission qui est à chaque fois arbitraire et ainsi n'est pas supérieure de la même manière pour tous les deuxièmes postes d'abonné qu'une puissance d'émission correspondant à la valeur d'atténuation déterminée auparavant, de façon à ce qu'elle est à chaque fois relevée par rapport à celle-ci.

2. Procédé selon la revendication 1, dans lequel
- les transmission de signaux des postes d'abonné (MS) concernent certaines applications,
- une priorité plus élevée est associée aux applications concernant les transmissions de signaux des deuxièmes postes d'abonné (MS) avant la transmission du signal qu'aux applications concernant les transmissions de signaux des premiers postes d'abonné.

3. Procédé selon la revendication 2, dans lequel
des signaux sont transmis par les postes d'abonné (MS), qui concernent une invitation à l'attribution de ressources radio, un acquittement ou des messages pour l'actualisation du lieu de séjour des postes d'abonné (MS).

4. Procédé selon l'une des revendications précédentes, dans lequel
avant la transmission des signaux, une priorité plus élevée est associée aux deuxièmes postes d'abonné (MS) par rapport aux premiers postes d'abonné.

5. Procédé selon l'une des revendications précédentes, dans lequel
- les transmissions de signaux des postes d'abonnés (MS) concernent des services spécifiques,
- une priorité plus élevée est associée aux services concernant les transmissions de signaux des deuxièmes postes d'abonné (MS) avant la transmission de signaux qu'aux services concernant les transmissions de signaux des premiers postes d'abonné.

6. Procédé selon l'une des revendications précédentes, dans lequel
lors d'une transmission répétée de signaux par les deuxièmes postes d'abonné (MS) le niveau du relèvement est modifié.

7. Procédé selon l'une des revendications précédentes, dans lequel
les valeurs d'atténuation pour les trajets de transmission sont déterminées par l'analyse de la puissance de réception d'un canal d'organisation (BCCH).

8. Procédé selon l'une des revendications précédentes, dans lequel
le canal (RACH) est à large bande et est organisé selon un mode TDD - *duplex à répartition dans le temps* - ou FDD - *duplex à répartition en fréquence* - d'un système radio-mobile UMTS.

9. Poste d'abonné pour un système de radiocommunication qui présente un canal (RACH) pour un accès arbitraire, que plusieurs postes d'abonné (MS) utilisent de façon non coordonnée,
- avec un dispositif d'émission pour la transmission de signaux dans le canal (RACH) pour l'accès arbitraire,
- avec une unité pour déterminer une valeur d'atténuation pour le trajet de transmission respectif,
**caractérisé par**
un dispositif de commande pour régler la puissance d'émission pour la transmission de signaux à une valeur qui est, arbitrairement, c'est-à-dire pas de la même manière pour tous les postes d'abonné, supérieure à une puissance d'émission correspondant à la valeur d'atténuation déterminée auparavant.
